# EUROPEAN PATENT APPLICATION

(11) **EP 4 782 087 A1**
(43) Date of publication of application: **29.07.2026**
(21) Application number: 24867964.9
(22) Date of filing: 13.08.2024
(51) Int. Cl.: B01D 53/14, B01D 53/04, B01D 53/22, B01D 53/50, B01D 53/56, B01D 53/62, B01D 53/78, B01D 53/82

(54) **SYSTEM FOR REMOVING NITROGEN OXIDES AND/OR SULFUR OXIDES, METHOD FOR REMOVING NITROGEN OXIDES AND/OR SULFUR OXIDES, SYSTEM FOR SEPARATING AND CAPTURING CARBON DIOXIDE, AND METHOD FOR SEPARATING AND CAPTURING CARBON DIOXIDE**

(30) Priority: 22.09.2023 JP 2023158512
(71) Applicant: NATIONAL UNIVERSITY CORPORATION KYOTO INSTITUTE OF TECHNOLOGY, Kyoto-shi, Kyoto 606-8585 (JP); Tosoh Corporation, Shunan-shi, Yamaguchi 746-8501 (JP); KITZ Micro Filter Corporation, Chino-shi, Nagano 391-8566 (JP)
(72) Inventor: TANIGUCHI, Ikuo, Kyoto-shi, Kyoto 606-8585 (JP); INOUE, Hiroshi, Yokkaichi-shi, Mie 510-8540 (JP); HARADA, Yuki, Yokkaichi-shi, Mie 510-8540 (JP); SAKAI, Toshihisa, Chino-shi, Nagano 391-8566 (JP)
(74) Representative: Novagraaf International SA
(86) International application number: PCT/JP2024/028882
(87) International publication number: WO 2025/062883

(57) **Abstract**

Provided is a method for removing nitrogen oxide and/or sulfur oxide from a gas to be treated containing nitrogen oxide and/or sulfur oxide and carbon dioxide, the method including a gas supply step of supplying the gas to be treated to an anion exchanger packed tower in which an anion exchanger is packed.

## Description

### TECHNICAL FIELD

The present disclosure relates to a system for removing nitrogen oxide and/or sulfur oxide, a method for removing nitrogen oxide and/or sulfur oxide, a system for separating and recovering carbon dioxide, and a method for separating and recovering carbon dioxide.

### BACKGROUND ART

In recent years, there have been spotlighted techniques for separating and recovering carbon dioxide responsible for global warming, before emission to the atmosphere from large-scale generation sources such as thermal power plants or blast furnaces in ironworks.

As such techniques, for example, techniques for separation and recovery of carbon dioxide with facilitated transport membranes have been researched and developed (see, for example, Patent Document 1).

In addition, amine compounds are often used as carbon dioxide carriers in carbon dioxide recovery techniques typified by absorption methods, adsorption methods, and membrane separation methods. There has been studied, in the case of use of amine compounds as carbon dioxide carriers, removal of nitrogen oxide and/or sulfur oxide with systems for removing nitrogen oxide and/or sulfur oxide, prior to separation and recovery of carbon dioxide, in order to efficiently react amine compounds and carbon dioxide (see, for example, Patent Document 2). Such techniques, when used, have often required large-scale facilities and have been liable to increase the facility cost and burden of operation management.

### PRIOR ART DOCUMENTS

### PATENT DOCUMENTS

Patent Document 1: JP 2009-185118 A
Patent Document 2: JP H3-293017 A

### SUMMARY OF INVENTION

### TECHNICAL PROBLEM

In view of the above circumstances, there is a demand for development of a method for more simply removing nitrogen oxide and/or sulfur oxide. An object of the present disclosure is to provide a method for simply removing nitrogen oxide and/or sulfur oxide.

### SOLUTION TO PROBLEM

The inventors of the present disclosure have made intensive studies in order to solve the above problems, and as a result, have found that a packed tower in which an anion exchanger is packed can be used to simply remove nitrogen oxide and/or sulfur oxide in a gas to be treated, thereby leading to completion of the present disclosure.

Specifically, the summary of the present disclosure is as follows.

[1] A method for removing nitrogen oxide and/or sulfur oxide from a gas to be treated containing nitrogen oxide and/or sulfur oxide and carbon dioxide, the method comprising:
   a gas supply step of supplying the gas to be treated to an anion exchanger packed tower in which an anion exchanger is packed.
[2] The method for removing nitrogen oxide and/or sulfur oxide according to [1], comprising a temperature regulation step of controlling a temperature of the anion exchanger in a range of 20°C or more and 100°C or less.
[3] The method for removing nitrogen oxide and/or sulfur oxide according to [1] or [2], comprising a condition control step of controlling one or more conditions selected from the group consisting of a flow rate, a temperature, and a humidity of the gas to be treated.
[4] A system for removing nitrogen oxide and/or sulfur oxide from a gas to be treated containing nitrogen oxide and/or sulfur oxide and carbon dioxide, the system comprising:
   a condition control section that controls one or more conditions selected from the group consisting of a flow rate, a temperature, and a humidity of the gas to be treated;
   an anion exchanger packed tower in which an anion exchanger is packed and to which the gas to be treated controlled with respect to the condition(s) by the condition control section is supplied; and
   a temperature regulation section that controls a temperature of the anion exchanger in a range of 20°C or more and 100°C or less.
[5] A system for separating and recovering carbon dioxide, the system comprising:
   an anion exchanger packed tower in which an anion exchanger is packed and to which a gas to be treated containing nitrogen oxide and/or sulfur oxide and carbon dioxide is supplied, and which discharges a carbon dioxide-containing gas;
   a temperature regulation section that controls a temperature of the anion exchanger in a range of 20°C or more and 100°C or less; and
   a carbon dioxide separation/recovery section that separates and recovers carbon dioxide from the carbon dioxide-containing gas by one or more methods selected from the group consisting of an absorption method, an adsorption method, and a membrane separation method.
[6] The system for separating and recovering carbon dioxide according to [5], comprising a condition control section that controls one or more conditions selected from the group consisting of a flow rate, a temperature, and a humidity of the gas to be treated.
[7] The system for separating and recovering carbon dioxide according to [5] or [6], wherein
   the carbon dioxide separation/recovery section comprises a carbon dioxide absorption section that is a portion that separates carbon dioxide at least by the absorption method and that comprises an amine compound solution, and a first carbon dioxide desorption section comprising a heating apparatus,
   the carbon dioxide absorption section is a portion that contacts the amine compound solution and the carbon dioxide-containing gas to absorb carbon dioxide in the carbon dioxide-containing gas by the amine compound solution, and
   the first carbon dioxide desorption section is a portion that allows the amine compound solution absorbing carbon dioxide to be heated with the heating apparatus to desorb carbon dioxide from the amine compound solution.
[8] The system for separating and recovering carbon dioxide according to any of [5] to [7], wherein
   the carbon dioxide separation/recovery section comprises a carbon dioxide adsorption section that is a portion that separates carbon dioxide at least by the adsorption method and that comprises a solid adsorbent in which a carbon dioxide carrier is supported on a porous support material, and a second carbon dioxide desorption section comprising a heating apparatus and/or a depressurization apparatus,
   the carbon dioxide adsorption section is a portion that contacts the solid adsorbent and the carbon dioxide-containing gas to adsorb carbon dioxide in the carbon dioxide-containing gas by the solid adsorbent, and
   the second carbon dioxide desorption section is a portion that allows the solid adsorbent adsorbing carbon dioxide to be heated with the heating apparatus and/or placed under a depressurization condition with the depressurization apparatus, to desorb carbon dioxide from the solid adsorbent.
[9] The system for separating and recovering carbon dioxide according to any of [5] to [8], wherein the carbon dioxide separation/recovery section is a portion that separates and recovers carbon dioxide at least by the membrane separation method, and comprises a facilitated transport membrane into which a carbon dioxide carrier is introduced.
[10] A method for separating and recovering carbon dioxide, the method comprising a separation/recovery step of separating and recovering carbon dioxide from the gas to be treated with the system for separating and recovering carbon dioxide according to any of [5] to [9].

### ADVANTAGEOUS EFFECTS OF INVENTION

According to the present disclosure, a method for simply removing nitrogen oxide and/or sulfur oxide can be provided.

### BRIEF DESCRIPTION OF THE DRAWINGS

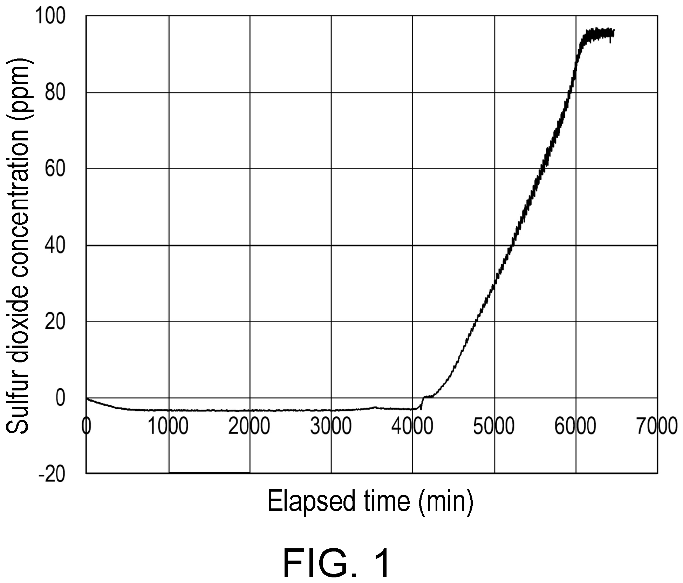

[Fig. 1] FIG. 1 is a graph representing the time-course change in sulfur dioxide concentration in a carbon dioxide-containing gas discharged from an anion exchanger packed tower in Example 1.

### DESCRIPTION OF EMBODIMENTS

In the present disclosure, "X to Y" indicating a range means "X or more and Y or less". In a case where a numerical value range represented by "X to Y" or "X or more and Y or less" is described stepwise (for example, in a preferred order), the upper limit and the lower limit of each numerical value range can be arbitrarily combined. In the present disclosure, the designation "X such as x1, x2, and x3" means that x1, x2, x3, and the like are listed as examples of X, and does not mean that X is limited to x1, x2, x3, and the like.

Hereinafter, embodiments of the present disclosure are described in detail.

### <1. Method for removing nitrogen oxide and/or sulfur oxide>

A first embodiment of the present disclosure is a method for removing nitrogen oxide and/or sulfur oxide from a gas to be treated containing nitrogen oxide and/or sulfur oxide and carbon dioxide, the method including a gas supply step of supplying the gas to be treated to an anion exchanger packed tower in which an anion exchanger is packed.

According to the present embodiment, a method for removing nitrogen oxide and/or sulfur oxide from a gas to be treated can be provided by a simple operation in which a gas to be treated containing nitrogen oxide and/or sulfur oxide and carbon dioxide is supplied to an anion exchanger packed tower. Such a method not only is advantageous in terms of cost because a relatively inexpensive anion exchange resin can be used for removal of nitrogen oxide and/or sulfur oxide, but also can suppress the facility cost because a large-scale facility is not required.

The anion exchanger packed tower is a packed tower in which an anion exchanger is packed.

The anion exchanger is one in which an anion exchange group is introduced into a substrate. The form of the anion exchanger is not particularly limited, and may be, for example, a particulate form, a fibrous form, a sponge-like form, a membrane form, and any composite structure thereof (for example, a structure as a composite of a particulate substrate located on a surface of a sponge-like substrate). In particular, the anion exchanger is preferably a particulate substrate, a sponge-like substrate, or a composite structure including a particulate substrate and a sponge-like substrate because the packing density can be higher and packing is easily made even in the case of a large-size packed tower.

The material constituting the substrate of the anion exchanger is not particularly limited, and preferred examples include olefin-based polymers such as polyethylene, polypropylene, polymethylpentene-1, and polycyclopentadiene; crosslinked polymers of the olefin-based polymers; styrene-based polymers such as polystyrene, polychlorostyrene, polychloromethylstyrene, and poly-α-methylstyrene; crosslinked polymers of the styrene-based polymers; (meth)acrylic polymers such as polymethyl methacrylate; crosslinked polymers of the (meth)acrylic polymers; unsaturated carboxylate polymers such as polydiethyl fumarate and polydiisopropyl fumarate; and crosslinked polymers of the unsaturated carboxylate polymers; because these are high in strength and excellent in chemical stability. The material constituting the substrate may be used singly or in any combination and ratio of two or more kinds thereof.

The surface structure of the substrate of the anion exchanger is not particularly limited, and may be a porous structure (MR form) having a macropore, or a gel form having no macropore.

Examples of the anion exchange group introduced into the anion exchanger include a weakly basic anion exchange group typified by a tertiary amino group and a strongly basic anion exchange group typified by a quaternary ammonium group, and two or more thereof may be mixed and introduced. Suitable specific examples of the anion exchange group include weakly basic anion exchange groups such as a dimethylamino group, a diethylamino group, a dibutylamino group, and a polyethylenimino group; and strongly basic anion exchange groups such as a trimethylammonium group, a triethylammonium group, a tributylammonium group, a (2-hydroxyethyl)dimethylammonium group, a (3-hydroxypropyl)dimethylammonium group, a di(2-hydroxyethyl)methylammonium group, and a dimethylsulfonium group. Among these ion exchange groups, a weakly basic anion exchange group is preferred because heat resistance is high and regeneration is easy.

The amount of the anion exchange group introduced into the anion exchanger is not particularly limited, and is preferably 0.1 mg equivalent/g to 6.0 mg equivalent/g, more preferably 0.5 mg equivalent/g to 5.0 mg equivalent/g.

The counterion of the anion exchange group is not particularly limited, and is preferably a hydroxide ion and/or a hydrogen carbonate ion. In a case where the counterion of the anion exchange group is a hydroxide ion, a gas to be treated containing carbon dioxide is supplied to the anion exchanger packed tower, to allow the counterion to be exchanged from the hydroxide ion to a hydrogen carbonate ion. In a case where the counterion of the anion exchange group is a hydrogen carbonate ion or in a case where the counterion is a hydroxide ion, the hydrogen carbonate ion or the hydroxide ion as the counterion is exchanged with a nitrogen dioxide-derived nitrite ion, a nitrogen dioxide-derived nitrate ion, a sulfur dioxide-derived sulfite ion, and a sulfur dioxide-derived sulfate ion in the gas to be treated. These ions can be captured or immobilized by the anion exchanger, to remove nitrogen oxide and/or sulfur oxide from the gas to be treated. In this regard, carbon dioxide in the gas to be treated is not ion-exchanged with a hydrogen carbonate ion and thus is not captured by the anion exchanger and directly passes through the anion exchanger packed tower. The state of such an ion exchange group distributed in the substrate is not particularly restricted, and such an ion exchange group may be concentratively introduced in a substrate surface or may be uniformly introduced into the substrate.

The method for introducing the anion exchange group into the substrate is not particularly limited, and examples include a method for introducing the anion exchange group into the substrate by reaction of a chloromethyl group in the substrate with various amine compounds; a method for introducing the anion exchange group into the substrate by graft polymerization of a polymer chain having a chloromethyl group to the substrate and then reaction of the chloromethyl group with various amine compounds; a method for introducing the anion exchange group into the substrate by graft polymerization of a polymer chain to the substrate and then introduction of a chloromethyl group to a graft chain and reaction of the chloromethyl group with various amine compounds; a method for introducing the anion exchange group into the substrate by reaction of an epoxy group in the substrate with various amine compounds; a method for introducing the anion exchange group into the substrate by graft polymerization of a polymer chain having an epoxy group to the substrate and then reaction of the epoxy group with various amine compounds; and a method for introducing the anion exchange group into the substrate by graft polymerization of a polymer chain to the substrate and then introduction of an epoxy group into a graft chain and reaction of the epoxy group with various amine compounds.

The packed tower in which the anion exchanger is to be packed is not particularly limited as long as the gas to be treated can flow through the packed tower, and is preferably a column. The shape of the packed tower is not particularly limited, and is preferably cylindrical or rectangular. The layer height of the anion exchanger packed in the packed tower depends on the cross-sectional area of the packed tower and the flow rate and the like of the gas to be treated, and is preferably 1 cm to 500 cm.

The method according to the present embodiment preferably includes a temperature regulation step of controlling the temperature of the anion exchanger packed in the anion exchanger packed tower, in a specified range. In the temperature regulation step, the temperature of the anion exchanger is preferably controlled to 20°C to 100°C, more preferably controlled to 40°C to 80°C, further preferably controlled to 40°C to 60°C. When the temperature of the anion exchanger is equal to or more than the above lower limit, nitrogen oxide and/or sulfur oxide can be removed at a sufficient rate. When the temperature of the anion exchanger is equal to or less than the above upper limit, decomposition of the anion exchange group introduced into the anion exchanger can be suppressed to allow stability of the anion exchange group to be ensured, and therefore rapid ion exchange reaction can be realized. The method for regulating the temperature of the anion exchanger is not particularly limited, and examples thereof include a method including disposing the anion exchanger packed tower in a constant-temperature bath.

The temperature of the gas to be treated containing nitrogen oxide and/or sulfur oxide and carbon dioxide, supplied to the anion exchanger packed tower, is not particularly limited, and is preferably 20°C to 100°C, more preferably 40°C to 80°C, further preferably 40°C to 60°C. When the temperature of the gas to be treated is equal to or more than the above lower limit, nitrogen oxide and/or sulfur oxide can be removed at a sufficient rate. When the temperature of the gas to be treated is equal to or less than the above upper limit, decomposition of the anion exchange group in the anion exchanger can be suppressed to allow stability of the anion exchange group to be ensured, and therefore rapid ion exchange reaction can be realized.

The relative humidity of the gas to be treated is not particularly limited, a wet state is more preferred than a dry state, and the relative humidity is more preferably 50% to 95%, further preferably 70% to 90%. The moisture content in the anion exchanger is also not particularly limited, and is preferably 30% to 80%.

The flow rate of the gas to be treated supplied to the anion exchanger packed tower is not particularly limited, and is preferably a flow rate allowing the linear velocity and/or the space velocity to fall within specified range(s). Specifically, the linear velocity of the gas to be treated is preferably 0.01 m/sec to 1.00 m/sec, more preferably 0.10 m/sec to 0.50 m/sec, further preferably 0.13 m/sec to 0.50 m/sec. The space velocity of the gas to be treated is preferably 100 hr⁻¹ to 10,000 hr⁻¹, more preferably 500 hr⁻¹ to 9,000 hr⁻¹, further preferably 1,000 hr⁻¹ to 5,000 hr⁻¹, still further preferably 2,400 hr⁻¹ to 3,600 hr⁻¹.

In order to control any one or two or more of the flow rate, the temperature, and the humidity of the gas to be treated in the above preferred range(s), it is preferable in the present embodiment to perform a condition control step of controlling one or more conditions selected from the group consisting of the flow rate, the temperature, and the humidity of the gas to be treated, before the gas supply step. The flow rate of the gas to be treated can be controlled with a control tool such as a mass flow controller and a flow control valve. The temperature of the gas to be treated can be controlled with a control tool such as a heater, a cooler, and a heat exchanger. The humidity can be controlled with a bubbler, a precise humidity generator, and the like.

The composition of the gas to be treated preferably includes 10 ppm to 300 ppm of nitrogen oxide, 1 ppm to 200 ppm of sulfur oxide, and 5% by volume to 20% by volume of carbon dioxide. The composition of the carbon dioxide-containing gas discharged from the ion exchanger packed tower preferably includes 20 ppm or less of nitrogen dioxide in nitrogen oxide, 5 ppm or less of sulfur oxide, and carbon dioxide at a concentration of 10% or more relative to the carbon dioxide concentration in the gas to be treated, more preferably includes 5 ppm or less of nitrogen dioxide in nitrogen oxide, 0 ppm of sulfur oxide, and carbon dioxide at a concentration of ±1% by volume relative to the carbon dioxide concentration in the gas to be treated, further preferably includes 5 ppm or less of nitrogen dioxide, 0 ppm of sulfur oxide, and carbon dioxide at the same concentration as the carbon dioxide concentration in the gas to be treated. Herein, with respect to nitrogen oxide, nitrogen dioxide is ionized into a nitrate ion and thus removed with the anion exchanger packed tower, whereas nitrogen monoxide is low in solubility in water and is not ionized and therefore is not high in removal efficiency with the anion exchanger packed tower, and the entire concentration of nitrogen oxide does not necessarily achieve 0 ppm. However, nitrogen monoxide is low in solubility in water and thus is not blended into a carbon dioxide separation membrane and is considered to have a small influence on separation and recovery of carbon dioxide as described later.

The gas to be treated may contain any other component than nitrogen oxide and/or sulfur oxide and carbon dioxide as long as the effects of the present disclosure are not impaired. Examples of such any other component include nitrogen, oxygen, carbon monoxide, hydrogen, and hydrogen sulfide.

According to the method according to the present embodiment, the gas to be treated containing nitrogen oxide and/or sulfur oxide and carbon dioxide can be supplied to the ion exchanger packed tower under the above suitable conditions, to reduce the concentration of such nitrogen oxide and/or sulfur oxide in the gas to be treated to 20 ppm or less even in the case of the presence of such nitrogen oxide and/or sulfur oxide at a high concentration of 100 ppm or more in the gas to be treated.

Examples of nitrogen oxide include nitrogen monoxide, dinitrogen monoxide, and nitrogen dioxide. The gas to be treated may contain only one of these, or may contain two or more of these in any combination and ratio. The method according to the present embodiment is suitable for removal of, in particular, nitrogen dioxide in such nitrogen oxide. Examples of sulfur oxide include sulfur dioxide and sulfur trioxide. The gas to be treated may contain only one of these, or may contain both thereof at any ratio.

The method for supplying the gas to be treated to the anion exchanger packed tower is not particularly limited, and examples thereof include a method including supplying the gas to be treated so that the gas to be treated moves from one end to another end of the ion exchanger packed tower. The direction of movement of the gas to be treated depends on the arrangement of the packed tower and is not particularly limited, and may be the gravity direction, may be a direction opposite to the gravity direction, may be a direction perpendicular to the gravity direction, or may be a direction inclined at any angle to such a direction. Herein, a plurality of such anion exchanger packed towers may be placed in series or in parallel, and connected and then used.

### <2. System for removing nitrogen oxide and/or sulfur oxide>

A second embodiment of the present disclosure is a system for removing nitrogen oxide and/or sulfur oxide from a gas to be treated containing nitrogen oxide and/or sulfur oxide and carbon dioxide, the system including an anion exchanger packed tower to which the gas to be treated is supplied. An anion exchanger is packed in the anion exchanger packed tower. The system according to the present embodiment preferably includes a condition control section that controls one or more conditions selected from the group consisting of the flow rate, the temperature, and the humidity of the gas to be treated, in order to enable nitrogen oxide and/or sulfur oxide to be more efficiently removed from the gas to be treated. The system according to the present embodiment preferably includes a temperature regulation section that controls the temperature of the anion exchanger in a specified range, in order to enable nitrogen oxide and/or sulfur oxide from the gas to be treated to be more stably and rapidly removed.

The system according to the present embodiment is a system that performs the removal method according to the first embodiment. In other words, the gas supply step, the condition control step, and the temperature regulation step in the first embodiment are respectively performed in the ion exchanger packed tower, the condition control section, and the temperature regulation section in the present embodiment. Accordingly, the description in the section <1. Method for removing nitrogen oxide and/or sulfur oxide> is employed for each element in the system according to the present embodiment.

### <3. System for separating and recovering carbon dioxide>

A third embodiment of the present disclosure is a system for separating and recovering carbon dioxide, the system including an anion exchanger packed tower to which a gas to be treated containing nitrogen oxide and/or sulfur oxide and carbon dioxide is supplied, and which discharges the carbon dioxide-containing gas, and a carbon dioxide separation/recovery section that separates and recovers carbon dioxide from the carbon dioxide-containing gas by one or more methods selected from the group consisting of an absorption method, an adsorption method, and a membrane separation method. An anion exchanger is packed in the anion exchanger packed tower. The system according to the present embodiment preferably includes a condition control section that controls one or more conditions selected from the group consisting of the flow rate, the temperature, and the humidity of the gas to be treated, in order to enable nitrogen oxide and/or sulfur oxide to be more efficiently removed from the gas to be treated. The system according to the present embodiment preferably includes a temperature regulation section that controls the temperature of the anion exchanger in a specified range, in order to enable nitrogen oxide and/or sulfur oxide from the gas to be treated to be more stably and rapidly removed.

In the system according to the present embodiment, a gas from which nitrogen oxide and/or sulfur oxide are/is sufficiently removed with the system according to the second embodiment is subjected to separation and recovery of carbon dioxide by one or more methods selected from an absorption method, an adsorption method, and a membrane separation method. In other words, the carbon dioxide-containing gas used in one or more methods selected from an absorption method, an adsorption method, and a membrane separation method is a gas from which nitrogen oxide and/or sulfur oxide are/is removed from the gas to be treated. Therefore, in the system according to the present embodiment, even in a case where an amine compound is used in an absorption method, an adsorption method, and a membrane separation method, this prevents the consumption of amine compounds due to the reaction between nitrogen oxides and/or sulfur oxides and amine compounds, and prevents the salts of amine compounds produced by the reaction between nitrogen oxides and/or sulfur oxides and amine compounds from inhibiting the reaction between amine compounds and carbon dioxide. As a result, according to the system according to the present embodiment, carbon dioxide can be efficiently separated and recovered. In a preferred aspect of the present embodiment, carbon dioxide can be separated and recovered stably for a long period.

In addition, in the present embodiment, no large-scale facility is required and therefore an inexpensive and compact system can be constructed. In other words, the system according to the present embodiment can be used to separate and recover carbon dioxide at low cost from the carbon dioxide-containing gas generated from not only relatively small-scale carbon dioxide generation sources, but also large-scale carbon dioxide generation sources such as thermal power plants, blast furnaces in ironworks, and cement factories. Accordingly, the system according to the present embodiment can largely contribute to carbon dioxide saving.

The ion exchanger packed tower, the condition control section, and the temperature regulation section in the present embodiment respectively have the same meanings as in the ion exchanger packed tower, the condition control section, and the temperature regulation section in the second embodiment, and the same also applies to their preferred aspects. The gas supply step, the condition control step, and the temperature regulation step in the first embodiment are respectively performed in the ion exchanger packed tower, the condition control section, and the temperature regulation section in the present embodiment. Accordingly, the descriptions in the sections <1. Method for removing nitrogen oxide and/or sulfur oxide> and <2. System for removing nitrogen oxide and/or sulfur oxide> are employed for these elements in the system according to the present embodiment.

The absorption method, which is one of the methods for separating and recovering carbon dioxide in the carbon dioxide separation/recovery section, involves contacting an amine compound solution with a carbon dioxide-containing gas to absorb the carbon dioxide in the carbon dioxide-containing gas into the amine compound solution, and then heating the amine compound solution that has absorbed the carbon dioxide to desorb the carbon dioxide from the amine compound solution.

Accordingly, in a case where the carbon dioxide separation/recovery section is a portion that performs separation of carbon dioxide at least by the absorption method, the carbon dioxide separation/recovery section includes a carbon dioxide absorption section including the amine compound solution and a first carbon dioxide desorption section including a heating apparatus.

The carbon dioxide absorption section is a portion that contacts the amine compound solution and the carbon dioxide-containing gas to absorb carbon dioxide in the carbon dioxide-containing gas by the amine compound solution. The method for contacting the amine compound solution and the carbon dioxide-containing gas is not particularly limited, and examples include a method including, for example, bubbling (blowing) the carbon dioxide-containing gas into the amine compound solution. Accordingly, the carbon dioxide absorption section preferably includes a bubbling tool such as a bubbling tube and a bubbler.

The temperature for contacting the amine compound solution and the carbon dioxide-containing gas to absorb carbon dioxide by the amine compound solution is not particularly limited, and is preferably 10°C to 60°C.

The first carbon dioxide desorption section is a portion in which the amine compound solution having absorbed carbon dioxide is heated by the heating apparatus to desorb carbon dioxide from the amine compound solution. The heating apparatus is not particularly limited as long as it is capable of heating the amine compound solution, and any appropriate heating apparatuses, such as a known heater or an equivalent apparatus, may be adopted. The temperature for desorbing carbon dioxide absorbed in the amine compound solution is generally 100°C or more in the case of water as the solvent, and can also be lowered to 90°C or less by changing the solvent to an organic solvent or by using a sweep gas.

Examples of the solvent of the amine compound solution include water; alcohols such as 4-methoxyphenol, tetrafluoropropanol, and pentafluoropropanol; ethers such as diethylene glycol diethyl ether; ionic liquids; and any mixed solvents thereof.

The amine compound contained in the amine compound solution is an organic compound having one or more amino groups selected from the group consisting of a primary amino group, a secondary amino group, and a tertiary amino group, and is preferably an organic low-molecular compound having such an amino group. Suitable specific examples of the amine compound include alkanolamines such as monoethanolamine, diethanolamine, triethanolamine, methyldiethanolamine, diisopropanolamine, and diglycolamine; alkane diamines such as N,N-dimethyl-1,4-diaminobutane, N,N-dimethyl-1,3-diaminopropane, N,N-dimethyl-1,2-diaminopropane, N,N-dimethyl-1,2-diaminoethane, N,N-diethyl-1,4-diaminobutane, N,N-diethyl-1,3-diaminopropane, N,N-diethyl-1,2-diaminopropane, N,N-diethyl-1,2-diaminoethane, N,N-dipropyl-1,4-diaminobutane, N,N-dipropyl-1,3-diaminopropane, N,N-dipropyl-1,2-diaminopropane, and N,N-dipropyl-1,2-diaminoethane; polyalkylene polyamines such as diethylenetriamine; piperazine compounds such as piperazine, N-methylpiperazine, N-ethylpiperazine, N-(2-hydroxyethyl)piperazine, N-(2-hydroxypropyl)piperazine, N-(3-aminopropyl)piperazine, N-(2-aminoethyl)piperazine, N-(3,6-diazahexyl)-N'-(3-azapropyl)piperazine, and N-(3,6,9-triazanonyl)piperazine; polyethylene polyamines such as triethylenetetramine, tetraethylenepentamine, N,N-bis(2-aminoethyl)diethylenetriamine, pentaethylenehexamine, and hexaethyleneheptamine; piperidine compounds such as piperidine, 2-methylpiperidine, 1-(2,3-dihydroxypropyl)-piperidine, 1-(2,3-dihydroxypropyl)-4-methylpiperidine, 1-(2,3-dihydroxypropyl)-4-ethylpiperidine, 1-(2,3-dihydroxypropyl)-4-propylpiperidine, 1-(2,3-dihydroxypropyl)-4-butylpiperidine, 1-(2-hydroxy-3-methoxypropyl)-piperidine, 1-(2-hydroxy-3-methoxypropyl)-4-methylpiperidine, 1-(2-hydroxy-3-methoxypropyl)-4-ethylpiperidine, 1-(2-hydroxy-3-methoxypropyl)-4-propylpiperidine, 1-(2-hydroxy-3-methoxypropyl)-4-butylpiperidine, 1-(2,3-dimethoxypropyl)-piperidine, 1-(2,3-dimethoxypropyl)-4-methylpiperidine, 1-(2,3-dimethoxypropyl)-4-ethylpiperidine, 1-(2,3-dimethoxypropyl)-4-propylpiperidine, and 1-(2,3-dimethoxypropyl)-4-butylpiperidine; and bridged bicyclic amines such as 1,4-diazabicyclo[2.2.2]octane-2-methanol. The amine compound may be used singly or in any combination and ratio of two or more kinds thereof.

In the present disclosure, the "low molecular" means a compound having no molecular weight distribution and having a molecular weight of 2,000 or less, preferably 1,000 or less, more preferably 800 or less, further preferably 500 or less, and is distinguished from "polymer" or "resin" having a molecular weight distribution and having a molecular weight of 1,000 or more.

The content of the amine compound in the amine compound solution is not particularly limited, and is preferably 5% by mass to 70% by mass based on the total amount of the amine compound and the solvent.

The adsorption method as one method for separating carbon dioxide with the carbon dioxide separation/recovery section is a method for separating and recovering carbon dioxide with a solid adsorbent, and specific examples include a method including adsorbing carbon dioxide by an organic metal framework (MOF) as a carbon dioxide adsorbent, and desorbing carbon dioxide adsorbed by the MOF, under heating conditions and/or depressurization conditions; and a method including adsorbing carbon dioxide by a solid adsorbent, in which a carbon dioxide carrier is supported on a porous support material such as silica, and desorbing carbon dioxide adsorbed by the solid adsorbent, under heating conditions and/or depressurization conditions. In the present embodiment, it is preferable to carry out the adsorption method using a solid adsorbent material in which a carbon dioxide carrier is supported on a porous support material.

Accordingly, in a case where the carbon dioxide separation/recovery section is a portion that performs separation and recovery of carbon dioxide at least by the adsorption method, the carbon dioxide separation/recovery section includes a carbon dioxide adsorption section including a solid adsorbent in which a carbon dioxide carrier is supported on a porous support material, and a second carbon dioxide desorption section including a heating apparatus and/or a depressurization apparatus.

The carbon dioxide adsorption section is a portion that contacts the solid adsorbent and the carbon dioxide-containing gas to adsorb carbon dioxide in the carbon dioxide-containing gas by the solid adsorbent. The method for contacting the solid adsorbent and the carbon dioxide-containing gas is not particularly limited, and examples preferably include a method including supplying the carbon dioxide-containing gas to the solid adsorbent packed tower in which the solid adsorbent is packed. The packed tower in which the solid adsorbent is to be packed is not particularly limited as long as the carbon dioxide-containing gas can flow through the packed tower, and is preferably a tubular body such as a column and a U-shaped tube. The shape of the packed tower is not particularly limited, and is preferably cylindrical or rectangular. The layer height of the solid adsorbent packed inside the packed tower depends on the cross-sectional area of the packed tower and the flow rate and the like of the carbon dioxide-containing gas, and is preferably 5 cm to 500 cm.

The temperature for contacting the solid adsorbent and the carbon dioxide-containing gas to adsorb carbon dioxide by the solid adsorbent is not particularly limited as long as it is a temperature at which the solid adsorbent can hold up, and is preferably 20°C to 60°C.

The second carbon dioxide desorption section is a portion that allows the solid adsorbent adsorbing carbon dioxide to be heated with the heating apparatus and/or placed under a depressurization condition with the depressurization apparatus, to desorb carbon dioxide from the solid adsorbent. The heating apparatus is not particularly limited as long as it can heat the amine compound solution, and can be appropriately adopted from any heating apparatuses such as a known heater and an apparatus according to this. The depressurization apparatus is also not particularly limited, and can be appropriately adopted from any depressurization apparatuses such as a known depressurization pump and an apparatus according to this. In the second carbon dioxide desorption section, the solid adsorbent is preferably heated to 60°C to 200°C and/or the solid adsorbent is placed under a depressurization condition of 0.2 Pa or less, to desorb carbon dioxide.

Examples of the porous support material used in the solid adsorbent include mesoporous silica, polymethyl methacrylate, alumina, silica alumina, clay mineral, magnesia, zirconia, zeolite, a zeolite analog compound, activated carbon, and a carbon molecular sieve. The porous support material may be used singly or in any combination and ratio of two or more kinds thereof.

The porous support material is preferably a material large in specific surface area and pore volume in order to considerably support a carbon dioxide carrier. More specifically, the specific surface area of the porous support material is preferably 50 m²/g to 1,000 m²/g, more preferably 400 m²/g to 1,000 m²/g. The pore volume of the porous support material is preferably 0.1 cm³/g to 2.3 cm³/g, more preferably 1.5 cm³/g to 2.3 cm³/g.

Examples of the carbon dioxide carrier supported on the porous support material include alkanolamine, polyvalent amine, and alkali metal carbonate. Such alkanolamine and polyvalent amine are each preferably an amine in which a bulky group is bound to a nitrogen atom, from the viewpoint that carbon dioxide can be desorbed at a lower temperature. Suitable specific examples of the alkanolamine include 2-(isopropylamino)ethanol and diisopropanolamine. Suitable specific examples of the polyvalent amine include polyethylenimine, 4-butanediamine, N,N,N',N'-tetrakis(3-(isopropylamino)propyl)-1,4-butanediamine, 1,14-bis(isopropylamino)-3,6,9,12-tetraazatetradecane, 1,17-bis(isopropylamino)-3,6,9,12,15-pentaazaheptadecane, and 1,8-bis(isopropylamino)-3,6,-diazaoctane. Suitable specific examples of the alkali metal carbonate include lithium carbonate, sodium carbonate, potassium carbonate, rubidium carbonate, cesium carbonate, and any mixture thereof. The carbon dioxide carrier may be used singly or in any combination and ratio of two or more kinds thereof.

The method for supporting the carbon dioxide carrier on the porous support material is not particularly limited, and, for example, a method can be adopted which includes dissolving or dispersing the carbon dioxide carrier in a solvent such as water or alcohol, mixing the resultant with the porous support material, and then removing the solvent.

The membrane separation method as one method for separating carbon dioxide in the carbon dioxide separation/recovery section is a method for separating and recovering carbon dioxide with a membrane. The membrane separation method is a method for separating carbon dioxide with the difference in concentration as driving force, and thus can allow energy input to medium movement and membrane regeneration to be unnecessary, thereby reducing the recovery cost. In the present embodiment, the membrane separation method is preferably a membrane separation method with an organic polymer membrane easily to be chemically modified and to be formed into a module, more preferably a membrane separation method with a facilitated transport membrane enabling the permeation flux of carbon dioxide and the selectivity of carbon dioxide to be enhanced. Such an organic polymer membrane is advantageous in that mass production and cost reduction can be achieved.

Accordingly, in a case where the carbon dioxide separation/recovery section is a portion that separates and recovers carbon dioxide at least by the membrane separation method, the carbon dioxide separation/recovery section preferably includes a facilitated transport membrane into which a carbon dioxide carrier is introduced.

Examples of the carbon dioxide carrier include alkali metal carbonate, alkali metal hydrogen carbonate, alkali metal hydroxide, an amine compound, and any mixture thereof. In particular, the carbon dioxide carrier is preferably an amine compound in that such an amine compound reversibly or reversibly and selectively reacts with carbon dioxide. The carbon dioxide carrier may be used singly or in any combination and ratio of two or more kinds thereof.

Suitable specific examples of the alkali metal carbonate include lithium carbonate, sodium carbonate, potassium carbonate, rubidium carbonate, cesium carbonate, and any mixture thereof. Suitable specific examples of the alkali metal hydrogen carbonate include lithium hydrogen carbonate, sodium hydrogen carbonate, potassium hydrogen carbonate, rubidium hydrogen carbonate, cesium hydrogen carbonate, and any mixture thereof. Suitable specific examples of the alkali metal hydroxide include lithium hydroxide, sodium hydroxide, potassium hydroxide, rubidium hydroxide, and any mixture thereof.

Suitable specific examples of the amine compound include alkanolamines such as N-(2-aminoethyl)ethanolamine, N-[2-(dimethylamino)ethyl]-N-methylethanolamine, and N-[2-(diethylamino)ethyl]ethanolamine; triethylenetetramines such as N-(1,2-dihydroxy-n-propyl)piperazine, N-[(1-hydroxymethyl, 2-hydroxy)-n-propyl]piperazine, N-[(1-hydroxy-2-hydroxymethyl)-n-propyl]piperazine, N-(1,2-dihydroxy-n-propyl)-N'-methyl-piperazine, N-[1,2-bis(hydroxymethyl)-n-propyl]piperazine, N-[1,2-bis(hydroxymethyl)-n-propyl]-N'-methylpiperazine, diethylenetriamine, 1,4,7,10-tetraazadecane, N,N-bis(2-aminoethyl)-1,2-ethanediamine, 1-[2-[(2-aminoethyl)amino]ethyl]-piperazine, and 1, 4-bis(2-aminoethyl)-piperazine; tetraethylenepentamines such as 1,4,7,10,13-pentaazatridecane, N,N,N'-tris(2-aminoethyl)-1,2-ethanediamine, 1-[2-[2-[2-[(2-aminoethyl)amino]ethyl]amino]ethyl]-piperazine, 1-[2-[bis(2-aminoethyl)amino]ethyl]-piperazine, and bis[2-(1-piperazinyl)ethyl]amine; pentaethylenehexamines such as 1,4,7,10,13,16-hexaazahexadecane, N,N,N',N'-tetrakis(2-aminoethyl)-1,2-ethanediamine, N,N-bis(2-aminoethyl)-N'-[2-[(2-aminoethyl)amino]ethyl]-1,2-ethanediamine, 1-[2-[2-[2-[2-[2-[(2-aminoethyl)amino]ethyl]amino]ethyl]aminoethyl]-piperazine, 1-[2-[2-[2-[bis(2-aminoethyl)amino]ethyl]amino]ethyl]-piperazine, and N,N'-bis[2-(1-piperazinyl)ethyl]-1,2-ethanediamine; amino acids such as glycine, alanine, serine, proline, hydroxyproline, arginine, dimethylaminoglycine, and 2,3-diaminopropionic acid; and amine resins such as polyethylenimine, polyamidoamine-based dendrimers, polyallylamine, poly-N-1,2-dimethylpropylallylamine, poly-N-methylallylamine, poly-N,N-dimethylallylamine, poly-2-vinylpiperidine, poly-4-vinylpiperidine, and polyvinylamine. In the present disclosure, the "amine resin" means a compound which is a polymer of a compound having one or more amino groups selected from the group consisting of a primary amino group, a secondary amino group, and a tertiary amino group and which has two or more of the above amino groups.

The facilitated transport membrane (hereinafter, also referred to as "carbon dioxide separation membrane") is not particularly limited as long as it is a membrane into which the carbon dioxide carrier is introduced, and is preferably a membrane having a stacked structure composed of a porous membrane as a support layer and a separation function layer including a carbon dioxide carrier formed on a surface of the porous membrane.

The porous membrane is preferably an ultrafiltration membrane. The molecular weight cut off of the ultrafiltration membrane is preferably 500,000 or less, more preferably 5,000 to 500,000.

The material of the porous membrane, used here, can be, for example, any of polyolefins such as polyethylene and polypropylene; fluorine-containing polymers such as polytetrafluoroethylene, polyvinyl fluoride, and polyvinylidene fluoride; chlorine-containing polymers such as polyvinyl chloride and polyvinylidene chloride; vinyl polymers such as polystyrene, polyacrylonitrile, and polymethyl methacrylate; condensed polymers such as polysulfone, polyether sulfone, polyether imide, polyamide, polyurethane, and polyimide; and polysaccharides such as cellulose acetate and chitosan. The material of the porous membrane may be used singly or in any combination and ratio of two or more kinds thereof.

Examples of the form of the porous membrane include a sheet-shaped flat membrane and a hollow-fiber membrane, and in particular, a hollow-fiber membrane is preferred.

The matrix polymer of the separation function layer including the carbon dioxide carrier is preferably a polar polymer excellent in affinity with the carbon dioxide carrier. Suitable specific examples of the polar polymer include polyvinyl alcohol, polyethylene glycol, polyethylene glycol di(meth)acrylate, polypropylene glycol, polypropylene glycol di(meth)acrylate, polyethylenimine, polyallylamine, polyamide epichlorohydrin, polyacrylic acid, polymethacrylic acid, polyvinyl pyrrolidone, polyacrylamide, polyvinylamine, polyornithine, polylysine, and any copolymer and crosslinked product thereof. The matrix polymer may be used singly or in any combination and ratio of two or more kinds thereof.

Suitable specific examples of the carbon dioxide separation membrane include a polymer membrane in which a gel layer composed of a polyvinyl alcohol-polyacrylic acid copolymer gel membrane and 2,3-diaminopropionic acid is supported on a hydrophilic ultrafiltration membrane; a polymer membrane including a water-soluble polymer such as polyvinyl alcohol and a specified amine compound (for example, N-(2-aminoethyl)ethanolamine); and a polymer membrane formed by immobilizing a polyamidoamine dendrimer high in affinity with carbon dioxide in a polymer obtained by photo-polymerization of polyethylene glycol dimethacrylate.

The carbon dioxide separation membrane used in the present embodiment is usually used as a carbon dioxide separation membrane module in which the carbon dioxide separation membrane is received in a housing. Accordingly, in a case where separation and recovery of carbon dioxide are performed in the carbon dioxide separation/recovery section by the membrane separation method, the carbon dioxide separation/recovery section usually includes the carbon dioxide separation membrane module (facilitated transport membrane module).

In a case where the carbon dioxide separation membrane is a flat membrane, specific examples of the carbon dioxide separation membrane module include a stacked module in which membranes are directly stacked or a stacked module in which a membrane element is produced and stacked; a pleated module in which the flat membrane is folded and received in a cylindrical container; and a spiral type module in which the flat membrane is bonded in an envelope manner with being sandwiched with a spacer (net) at the permeation side and the resultant is wound around a shift as a permeation passage with a spacer at the supply side being interposed. On the other hand, in a case where the carbon dioxide separation membrane is a tube-shaped, pipe-shaped, or hollow-fiber membrane, specific examples of the carbon dioxide separation membrane module include a tubular module and a hollow-fiber membrane module in which these membranes are converged. In the case of a monolith-type carbon dioxide separation membrane, specific examples of the carbon dioxide separation membrane module include a tubular module in which monolith-type elements are converged.

### <4. Method for separating and recovering carbon dioxide>

A fourth embodiment of the present disclosure is a method for separating and recovering carbon dioxide, the method including a separation/recovery step of separating and recovering carbon dioxide from a gas to be treated containing nitrogen oxide and/or sulfur oxide and carbon dioxide with the system according to the third embodiment. Alternatively, the method for separating and recovering carbon dioxide according to the fourth embodiment of the present disclosure is a method for separating and recovering carbon dioxide from a gas to be treated containing nitrogen oxide and/or sulfur oxide and carbon dioxide, according to the same mechanism as in the system according to the third embodiment, and a specific aspect thereof is as described with respect to the third embodiment.

In other words, the method for separating and recovering carbon dioxide according to the present embodiment includes a gas supply step of supplying a gas to be treated containing nitrogen oxide and/or sulfur oxide and carbon dioxide to an anion exchanger packed tower in which an anion exchanger is packed, and a carbon dioxide separation/recovery step of separating and recovering carbon dioxide from the carbon dioxide-containing gas discharged from the anion exchanger packed tower, by one or more methods selected from the group consisting of an absorption method, an adsorption method, and a membrane separation method. The method according to the present embodiment further includes a condition control step of controlling one or more conditions selected from the group consisting of the flow rate, the temperature, and the humidity of the gas to be treated, before the gas supply step, in order to enable nitrogen oxide and/or sulfur oxide to be more efficiently removed from the gas to be treated.

In a case where the absorption method is adopted in the carbon dioxide separation/recovery step, the carbon dioxide separation/recovery step preferably includes an absorption step of contacting an amine compound solution and the carbon dioxide-containing gas, to absorb carbon dioxide in the carbon dioxide-containing gas by the amine compound solution, and a desorption step of heating the amine compound solution absorbing carbon dioxide to desorb carbon dioxide from the amine compound solution.

In a case where the adsorption method is adopted in the carbon dioxide separation/recovery step, the carbon dioxide separation/recovery step preferably includes an adsorption step of contacting a solid adsorbent in which a carbon dioxide carrier is supported on a porous support material, and the carbon dioxide-containing gas, to adsorb carbon dioxide in the carbon dioxide-containing gas by the solid adsorbent, and a desorption step of heating the solid adsorbent adsorbing carbon dioxide or placing the solid adsorbent under a depressurization condition, to desorb carbon dioxide from the solid adsorbent.

In a case where the adsorption method is adopted in the carbon dioxide separation/recovery step, the carbon dioxide separation/recovery step preferably includes a membrane separation step of bringing the carbon dioxide-containing gas into contact with one end of a facilitated transport membrane into which a carbon dioxide carrier is introduce, to allow carbon dioxide in the carbon dioxide-containing gas to permeate through another end of the facilitated transport membrane.

The gas supply step and the condition control step respectively have the same meanings as in the gas supply step and the condition control step in the first embodiment, and the same also applies to their preferred aspects. The description in the section <1. Method for removing nitrogen oxide and/or sulfur oxide> is employed for these elements in the present steps.

The description in the section <3. System for separating and recovering carbon dioxide> is employed for the method for separating and recovering carbon dioxide from the carbon dioxide-containing gas by one or more methods selected from the group consisting of the absorption method, the adsorption method, and the membrane separation method, in the carbon dioxide separation/recovery step.

In the method according to the present embodiment, even in a case where an amine compound is used in the absorption method, the adsorption method, and the membrane separation method, the amine compound can be inhibited from being consumed due to reaction of nitrogen oxide and/or sulfur oxide with the amine compound, and a salt of the amine compound, generated by reaction of nitrogen oxide and/or sulfur oxide and the amine compound, can be inhibited from disturbing reaction of the amine compound and carbon dioxide. As a result, according to the system according to the present embodiment, carbon dioxide can be efficiently separated and recovered. In a preferred aspect of the present embodiment, carbon dioxide can be separated and recovered stably for a long period.

### EXAMPLES

Hereinafter, the present disclosure is described in further detail based on Examples, but the present disclosure is not limited to these Examples.

### <Removal of sulfur dioxide with anion exchanger packed tower>

### (Example 1)

An anion exchanger packed tower was produced by ion-exchanging the counterion of a weakly basic anion exchange resin "Amberlite IRA96SB" (manufactured by Du Pont, functional group: dimethylamino group) with a hydrogen carbonate ion, and then taking 15 mL of the resin in a water-wet state and packing the resin in a glass column having an inner diameter of 10 mm and a length of 300 mm. Thereafter, this anion exchanger packed tower was disposed in a constant-temperature bath at 40°C.

A carbon dioxide/nitrogen mixed gas (carbon dioxide/nitrogen = 15/85(v/v)) containing 100 ppm of sulfur dioxide was subjected to humidity regulation to a relative humidity of 90% with a high-dew point generator (manufactured by Shinyei Technology Co., Ltd.), and then supplied to the anion exchanger packed tower at a flow rate of 0.7 L/min, and the carbon dioxide-containing gas discharged from the anion exchanger packed tower was analyzed with a gas analyzer (PG-350, manufactured by Horiba Ltd.). The gas to be treated supplied to the anion exchanger packed tower exhibited a linear velocity of 0.13 m/sec and a space velocity of 2,400 hr⁻¹.

FIG. 1 represents the time-course change in sulfur dioxide concentration in the carbon dioxide-containing gas. According to FIG. 1, the sulfur dioxide concentration was 0 ppm until 4,000 minutes. It could be confirmed from this that sulfur dioxide could be removed from the carbon dioxide/nitrogen mixed gas containing sulfur dioxide by allowing the mixed gas to flow through the anion exchanger packed tower. Herein, the carbon dioxide concentration in the carbon dioxide-containing gas discharged from the anion exchanger packed tower was 15% by volume, and it was also confirmed that carbon dioxide was not removed with the anion exchanger packed tower.

### (Example 2)

Removal of sulfur dioxide was performed by the same method as in Example 1 except that the anion exchanger was changed to an OH-type strongly basic anion exchange resin "Dowex monosphere 550A" (manufactured by Du Pont, counterion: hydroxide ion).

The change in sulfur dioxide concentration was analyzed with respect to each elapsed time, and the sulfur dioxide concentration was 0 ppm until 2,000 minutes. It could be confirmed from this that sulfur dioxide could be removed from the carbon dioxide/nitrogen mixed gas containing sulfur dioxide by allowing the mixed gas to flow through the anion exchanger packed tower. The carbon dioxide concentration in the carbon dioxide-containing gas discharged from the anion exchanger packed tower was here 15% by volume, and it was also confirmed that carbon dioxide was not removed with the anion exchanger packed tower.

### (Example 3)

Removal of sulfur dioxide was performed by the same method as in Example 1 except that the anion exchanger packed tower was disposed in a constant-temperature bath at 60°C.

The change in sulfur dioxide concentration was analyzed with respect to each elapsed time, and the sulfur dioxide concentration was 0 ppm until 3,800 minutes. It could be confirmed from this that sulfur dioxide could be removed from the carbon dioxide/nitrogen mixed gas containing sulfur dioxide by allowing the mixed gas to flow through the anion exchanger packed tower. The carbon dioxide concentration in the carbon dioxide-containing gas discharged from the anion exchanger packed tower was 15% by volume, and it was also confirmed that carbon dioxide was not removed with the anion exchanger packed tower.

### (Example 4)

Removal of sulfur dioxide was performed by the same method as in Example 1 except that the anion exchanger packed tower was disposed in a constant-temperature bath at 80°C.

The change in sulfur dioxide concentration was analyzed with respect to each elapsed time, and the sulfur dioxide concentration was 0 ppm until 1,800 minutes. It could be confirmed from this that sulfur dioxide could be removed from the carbon dioxide/nitrogen mixed gas containing sulfur dioxide by allowing the mixed gas to flow through the anion exchanger packed tower. The carbon dioxide concentration in the carbon dioxide-containing gas discharged from the anion exchanger packed tower was 15% by volume, and it was also confirmed that carbon dioxide was not removed with the anion exchanger packed tower.

### (Example 5)

Removal of sulfur dioxide was performed by the same method as in Example 1 except that, after the counterion of a weakly basic anion exchange resin "Amberlite IRA96SB" (manufactured by Du Pont, functional group: dimethylamino group) was ion-exchanged with a hydrogen carbonate ion, 10 mL of the resin in a water-wet state was taken and packed in a glass column having an inner diameter of 8 mm and a length of 300 mm. The gas to be treated supplied to the anion exchanger packed tower exhibited a linear velocity of 0.20 m/sec and a space velocity of 3,600 hr⁻¹.

The change in sulfur dioxide concentration was analyzed with respect to each elapsed time, and the sulfur dioxide concentration was 0 ppm until 3,000 minutes. It could be confirmed from this that sulfur dioxide could be removed from the carbon dioxide/nitrogen mixed gas containing sulfur dioxide by allowing the mixed gas to flow through the anion exchanger packed tower. The carbon dioxide concentration in the carbon dioxide-containing gas discharged from the anion exchanger packed tower was 15% by volume, and it was also confirmed that carbon dioxide was not removed with the anion exchanger packed tower.

### (Example 6)

Removal of sulfur dioxide was performed by the same method as in Example 1 except that, after the counterion of a weakly basic anion exchange resin "Amberlite IRA96SB" (manufactured by Du Pont, functional group: dimethylamino group) was ion-exchanged with a hydrogen carbonate ion, 4 mL of the resin in a water-wet state was taken and packed in a glass column having an inner diameter of 5 mm and a length of 300 mm. The gas to be treated supplied to the anion exchanger packed tower exhibited a linear velocity of 0.50 m/sec and a space velocity of 9,000 hr⁻¹.

The change in sulfur dioxide concentration was analyzed with respect to each elapsed time, and the sulfur dioxide concentration was 0 ppm until 1,400 minutes. It could be confirmed from this that sulfur dioxide could be removed from the carbon dioxide/nitrogen mixed gas containing sulfur dioxide by allowing the mixed gas to flow through the anion exchanger packed tower. The carbon dioxide concentration in the carbon dioxide-containing gas discharged from the anion exchanger packed tower was 15% by volume, and it was also confirmed that carbon dioxide was not removed with the anion exchanger packed tower.

### <Removal of nitrogen dioxide with anion exchanger packed tower>

### (Example 7)

A nitrogen gas containing 100 ppm of nitrogen dioxide, and a carbon dioxide gas were mixed to prepare a carbon dioxide/nitrogen mixed gas (carbon dioxide/nitrogen = 15/85(v/v)) containing 85 ppm of nitrogen dioxide. Removal of nitrogen dioxide was performed by the same method as in Example 1 except that the gas to be treated was changed to the mixed gas prepared above.

The change in nitrogen dioxide concentration was analyzed with respect to each elapsed time, and then the nitrogen dioxide concentration was 20 ppm or less until 10,000 minutes. From this, the carbon dioxide/nitrogen mixed gas containing nitrogen dioxide could be allowed to flow through the anion exchanger packed tower, thereby reducing nitrogen dioxide. The carbon dioxide concentration in the carbon dioxide-containing gas discharged from the anion exchanger packed tower was 15%, and it was also confirmed that carbon dioxide was not removed with the anion exchanger packed tower.

### <System for separating and recovering carbon dioxide by combination of anion exchanger packed tower with absorption method>

### (Example 8)

A carbon dioxide/nitrogen mixed gas (carbon dioxide/nitrogen = 15/85(v/v)) containing 100 ppm of sulfur dioxide was subjected to humidity regulation to a relative humidity of 90%. The same anion exchanger packed tower as in Example 1 was disposed in a constant-temperature bath at 40°C, and the mixed gas subjected to humidity regulation was supplied at a flow rate of 1 L/min to this anion exchanger packed tower. Thereafter, the carbon dioxide-containing gas discharged from the anion exchanger packed tower was blown for 1 hour into an amine compound solution at 40°C prepared by mixing 30 g of monoethanolamine and 70 g of pure water. Thereafter, the temperature of the amine compound solution was raised to 110°C, and a gas composed of 100% of nitrogen was allowed to pass at a flow rate of 1 L/min to the amine compound solution for 1 hour, thereby desorbing carbon dioxide from the amine compound solution. The amount of carbon dioxide recovered was 5.0 L. The above cycle of absorption/desorption of carbon dioxide was repeated 50 times. The amount of carbon dioxide recovered at the 50-th cycle was 5.0 L, and thus it was confirmed that, according to the present method, the amount of carbon dioxide recovered, comparable with the initial, could be kept even if absorption and elimination of carbon dioxide were repeated.

### (Comparative Example 1)

The anion exchanger packed tower was not used, and the mixed gas subjected to humidity regulation to the same relative humidity as in Example 8 was blown into the amine compound solution used in Example 8. The cycle of absorption/desorption of carbon dioxide was repeated 50 times in the same manner as in Example 8, and thus it was confirmed that the amount of carbon dioxide recovered was lowered to 4.1 L at the 50-th cycle.

### <System for separating and recovering carbon dioxide by combination of anion exchanger packed tower with adsorption method>

### (Example 9)

A solid adsorbent was produced by dissolving 6.7 g of 2-(isopropylamino)ethanol (manufactured by FUJIFILM Wako Pure Chemical Corporation) in 20 g of methanol, adding 10 g of mesoporous silica (MSU-F, manufactured by Sigma-Aldrich) thereto to perform uniform dispersion, and then removing the methanol with stirring under reduced pressure.

10 g of the above solid adsorbent was packed in a glass U-shaped tube (having an inner diameter of 15 mm and a height of 150 mm), and both ends were secured with glass wool. Next, the U-shaped tube in which the solid adsorbent was packed was disposed in a constant-temperature bath at 25°C.

A carbon dioxide/nitrogen mixed gas (carbon dioxide/nitrogen = 15/85(v/v)) containing 100 ppm of sulfur dioxide was subjected to humidity regulation to a relative humidity of 90%. The same anion exchanger packed tower as in Example 1 was disposed in a constant-temperature bath at 40°C, and the mixed gas subjected to humidity regulation was supplied at a flow rate of 0.5 L/min to this anion exchanger packed tower. Thereafter, the carbon dioxide-containing gas discharged from the anion exchanger packed tower was supplied through one side of the U-shaped tube, thereby adsorbing carbon dioxide in the gas by the solid adsorbent. The respective carbon dioxide concentrations in the gas supplied through a supply port of the U-shaped tube and the gas discharged through a discharge port of the U-shaped tube were continuously measured with a gas analyzer (PG-350, manufactured by Horiba Ltd.), and the amount of carbon dioxide adsorbed by the solid adsorbent was determined from the difference in carbon dioxide concentration between the supply port and the discharge port. The amount of carbon dioxide adsorbed, at a time of point where the carbon dioxide concentration at the discharge port of the U-shaped tube was matched with the carbon dioxide concentration at the supply port thereof, was defined as the saturated amount of adsorption by the solid adsorbent. The saturated amount of adsorption was 70 g per kg of the solid adsorbent.

Next, the temperature of the constant-temperature bath in which the U-shaped tube was disposed was raised to 50°C, and the amount of carbon dioxide eliminated from the solid adsorbent was measured. The amount of carbon dioxide eliminated was 50 g per kg of the solid adsorbent. The above cycle of adsorption/elimination of carbon dioxide was repeated 50 times. The amount of carbon dioxide eliminated at the 50-th cycle was 47 g, and thus it was confirmed that, according to the present method, the amount of carbon dioxide recovered, comparable with the initial, could be kept even if adsorption and elimination of carbon dioxide were repeated.

### (Comparative Example 2)

The anion exchanger packed tower was not used and the mixed gas subjected to humidity regulation to the same relative humidity as in Example 9 was supplied to the U-shaped tube used in Example 9. The cycle of adsorption/elimination of carbon dioxide was repeated in the same manner as in Example 9, and thus it was confirmed that the amount of carbon dioxide eliminated was lowered every repetition of the cycle and the amount of carbon dioxide eliminated was lowered to 38 g at the 50-th cycle.

### <System for separating and recovering carbon dioxide by combination of anion exchanger packed tower with membrane separation>

### (Example 10)

A mixed solution was prepared by dissolving 3 g of polyvinyl alcohol (having a molecular weight of about 60,000, manufactured by Sigma-Aldrich) as a water-soluble polymer in 582 g of pure water and adding 15 g of N-(2-aminoethyl)ethanolamine (manufactured by Tokyo Chemical Industry Co., Ltd.) thereto. Next, the mixed solution was introduced into a primary side leading into a hollow-fiber membrane of a hollow-fiber membrane module (hollow-fiber membrane having an inner diameter of 0.36 mm, manufactured by KITZ MICRO FILTER CORPORATION), and allowed to pass for 10 minutes. Next, the hollow-fiber membrane module allowed to pass was dried at 20°C under an air atmosphere for 24 hours, and thus a hollow-fiber membrane module was obtained in which a separation function layer was formed on the inside (inner surface) of the hollow-fiber membrane.

A carbon dioxide/nitrogen mixed gas (carbon dioxide/nitrogen = 15/85(v/v)) containing 100 ppm of sulfur dioxide was subjected to humidity regulation to a relative humidity of 90%. The same anion exchanger packed tower as in Example 1 was disposed in a constant-temperature bath at 40°C, and the mixed gas subjected to humidity regulation was supplied to this anion exchanger packed tower. Thereafter, the carbon dioxide-containing gas discharged from the anion exchanger packed tower was supplied to the above hollow-fiber membrane module, and separation of carbon dioxide was performed under the following conditions.

Amount of gas supplied: 700 mL/min
Measurement temperature: 40°C
Sweep gas at permeation side: helium
Amount of sweep gas: 470 mL/min
Relative humidity: 90%
Pressure (abs): 105 kPa at supply side, 105 kPa at permeation side

The permeation fluxes of carbon dioxide and nitrogen immediately after supply of the mixed gas were respectively 150 GPU and 1.2 GPU. The selectivity coefficient of carbon dioxide, as the ratio of the permeation flux of carbon dioxide to the permeation flux of nitrogen, was 125.

Subsequently, the mixed gas was continuously supplied for 60 hours, and the permeation fluxes of carbon dioxide and nitrogen were measured. The permeation fluxes of carbon dioxide and nitrogen after 60 hours from the start of supply of the mixed gas were respectively 145 GPU and 1.2 GPU. The selectivity coefficient of carbon dioxide was 120, and time-course deterioration in separation performance was not observed.

### (Comparative Example 3)

The anion exchanger packed tower was not used and the mixed gas subjected to humidity regulation to the same relative humidity as in Example 10 was supplied to the hollow-fiber membrane module used in Example 10. The permeation flux of carbon dioxide began to decrease right from supply of the mixed gas, and decreased to 45 GPU after 5 hours from the start of supply of the mixed gas.

### INDUSTRIAL APPLICABILITY

As described above, according to the present disclosure, there can be provided a method for removing nitrogen oxide and/or sulfur oxide from a gas to be treated by a simple operation for supplying a gas to be treated containing nitrogen oxide and/or sulfur oxide and carbon dioxide to an anion exchanger packed tower. According to the present disclosure, there can also be provided a system for removing nitrogen oxide and/or sulfur oxide, by use of this method. In addition, there can also be provided a method for sufficiently separating and recovering carbon dioxide by application of the above method for removing nitrogen oxide and/or sulfur oxide, and furthermore there can also be provided a system for separating and recovering carbon dioxide, by use of this method.

## Claims

1. A method for removing nitrogen oxide and/or sulfur oxide from a gas to be treated containing nitrogen oxide and/or sulfur oxide and carbon dioxide, the method comprising:
a gas supply step of supplying the gas to be treated to an anion exchanger packed tower in which an anion exchanger is packed.

2. The method for removing nitrogen oxide and/or sulfur oxide according to claim 1, comprising a temperature regulation step of controlling a temperature of the anion exchanger in a range of 20°C or more and 100°C or less.

3. The method for removing nitrogen oxide and/or sulfur oxide according to claim 1, comprising a condition control step of controlling one or more conditions selected from the group consisting of a flow rate, a temperature, and a humidity of the gas to be treated.

4. A system for removing nitrogen oxide and/or sulfur oxide from a gas to be treated containing nitrogen oxide and/or sulfur oxide and carbon dioxide, the system comprising:
a condition control section that controls one or more conditions selected from the group consisting of a flow rate, a temperature, and a humidity of the gas to be treated;
an anion exchanger packed tower in which an anion exchanger is packed and to which the gas to be treated controlled with respect to the condition(s) by the condition control section is supplied; and
a temperature regulation section that controls a temperature of the anion exchanger in a range of 20°C or more and 100°C or less.

5. A system for separating and recovering carbon dioxide, the system comprising:
an anion exchanger packed tower in which an anion exchanger is packed and to which a gas to be treated containing nitrogen oxide and/or sulfur oxide and carbon dioxide is supplied, and which discharges a carbon dioxide-containing gas;
a temperature regulation section that controls a temperature of the anion exchanger in a range of 20°C or more and 100°C or less; and
a carbon dioxide separation/recovery section that separates and recovers carbon dioxide from the carbon dioxide-containing gas by one or more methods selected from the group consisting of an absorption method, an adsorption method, and a membrane separation method.

6. The system for separating and recovering carbon dioxide according to claim 5, comprising a condition control section that controls one or more conditions selected from the group consisting of a flow rate, a temperature, and a humidity of the gas to be treated.

7. The system for separating and recovering carbon dioxide according to claim 5, wherein
the carbon dioxide separation/recovery section comprises a carbon dioxide absorption section that is a portion that separates carbon dioxide at least by the absorption method and that comprises an amine compound solution, and a first carbon dioxide desorption section comprising a heating apparatus,
the carbon dioxide absorption section is a portion that contacts the amine compound solution and the carbon dioxide-containing gas to absorb carbon dioxide in the carbon dioxide-containing gas by the amine compound solution, and
the first carbon dioxide desorption section is a portion that allows the amine compound solution absorbing carbon dioxide to be heated with the heating apparatus to desorb carbon dioxide from the amine compound solution.

8. The system for separating and recovering carbon dioxide according to claim 5, wherein
the carbon dioxide separation/recovery section comprises a carbon dioxide adsorption section that is a portion that separates carbon dioxide at least by the adsorption method and that comprises a solid adsorbent in which a carbon dioxide carrier is supported on a porous support material, and a second carbon dioxide desorption section comprising a heating apparatus and/or a depressurization apparatus,
the carbon dioxide adsorption section is a portion that contacts the solid adsorbent and the carbon dioxide-containing gas to adsorb carbon dioxide in the carbon dioxide-containing gas by the solid adsorbent, and
the second carbon dioxide desorption section is a portion that allows the solid adsorbent adsorbing carbon dioxide to be heated with the heating apparatus and/or placed under a depressurization condition with the depressurization apparatus, to desorb carbon dioxide from the solid adsorbent.

9. The system for separating and recovering carbon dioxide according to claim 5, wherein the carbon dioxide separation/recovery section is a portion that separates and recovers carbon dioxide at least by the membrane separation method, and comprises a facilitated transport membrane into which a carbon dioxide carrier is introduced.

10. A method for separating and recovering carbon dioxide, the method comprising a separation/recovery step of separating and recovering carbon dioxide from the gas to be treated with the system for separating and recovering carbon dioxide according to any one of claims 5 to 9.
